# EUROPÄISCHE PATENTSCHRIFT

(11) **EP 1 856 815 B1**
(45) Veröffentlichungstag und Bekanntmachung des Hinweises auf die Patenterteilung: **24.06.2009**
(21) Anmeldenummer: 06707483.1
(22) Anmeldetag: 08.03.2006
(51) Int. Cl.: H04B 7/08, H04B 7/06

(54) **PROTOKOLLGESTEUERTE ANTENNENSELEKTION**
PROTOCOL CONTROLLED ANTENNA SELECTION
SELECTION D'ANTENNE COMMANDEE PAR PROTOCOLE

(30) Priorität: 09.03.2005 DE 102005011160; 14.04.2005 DE 102005017335
(43) Veröffentlichungstag der Anmeldung: 21.11.2007
(73) Patentinhaber: Fraunhofer-Gesellschaft zur Förderung der angewandten Forschung e.V., 80686 München (DE)
(72) Erfinder: WISSENDHEIT, Uwe, 91052 Erlangen (DE); KUZNETSOVA, Dina, 91058 Erlangen (DE)
(74) Vertreter: Zinkler, Franz
(86) Internationale Anmeldenummer: PCT/EP2006/002134
(87) Internationale Veröffentlichungsnummer: WO 2006/094786

(56) Entgegenhaltungen:
- EP-A- 1 315 325
- US-A- 6 018 555
- US-A- 6 023 610
- US-A- 6 069 564
- US-A1- 2004 266 375

## Beschreibung

Die vorliegende Erfindung bezieht sich auf ein Verfahren zur Antennenselektion, wie sie beispielsweise im Bereich der Radio-/Hochfrequenz-Identifizierungssysteme zur Anwendung kommt.

In vielen technischen Anwendungen ist es sinnvoll, eine aktive Phase einer Antenne zu steuern. Insbesondere im Bereich der Radio-/Hochfrequenz-Identifikationssysteme, d. h. Systemen zum Identifizieren von Objekten und Lebewesen durch RFID-, bzw. Transponder-Technologien ergibt sich beispielsweise oft die Notwendigkeit, ein Ausleseergebnis durch mehrfaches Senden bzw. Empfangen zu erzielen. Die Zahl solcher RFID-Systeme hat in den letzten Jahren stark zugenommen, sie dienen beispielsweise der berührungslosen Identifikation von Objekten oder Produkten.

Die Sendefrequenzen dieser Systeme liegen vorwiegend in den ISM-Frequenzbändern, die von Industrie, Wissenschaft und Medizintechnik lizenzfrei genutzt werden können. Die Besonderheit der Transpondertechnologie besteht dabei darin, dass die in der Regel passiven Transponder bzw. Empfänger die für ihre Funktion notwendige Energie aus dem zum Senden und Empfangen der Daten verwendeten Feld selbst beziehen. Man unterscheidet je nach Funktionsprinzip elektromagnetische oder induktive Systeme, wobei beide Systeme zur effizienten Kopplung eines Senders und eines Empfängers unterschiedliche Arten von Antennen verwenden. Bei einer induktiven Kopplung beispielsweise wird in einem einfachen Beispiel eine Antenne aus einer Leiterschleife bestehen, wobei die Spannung, die in der Leiterschleife durch ein die Schleife durchsetzendes Magnetfeld induziert wird, als Signal ausgewertet werden kann. Da die Höhe der induzierten Spannung von dem insgesamt die Leiterschleife durchsetzenden magnetischen Fluss abhängt, ist es für eine maximale Kopplung des Transponders an das Magnetfeld notwendig, dass die Flächennormale der durch die Leiterschleife gebildete Fläche parallel zur Feldrichtung des Magnetfeldes ist. Wenn das Magnetfeld von dem Sender ebenfalls durch eine Spule erzeugt wird, sind also idealerweise die Flächennormalen der Sendespule und der Empfangsspule des Transponders ebenfalls parallel, um die bestmögliche Kopplung zwischen Sender und Empfänger zu erzielen. Im ungünstigsten Fall, in dem die Flächennormale der Sendespule rechtwinklig zur Flächennormale der Empfangsspule steht, ist keine direkte Datenübertragung mehr möglich. In den meisten Fällen arbeiten RFID-Systeme mit nur einer Antenne, weswegen aufgrund oben geschilderte Sachverhaltes eine Auslese nur in eine Raumrichtung möglich ist. Es gibt jedoch auch Anwendungsbereiche, wo auf Grund der Orientierung eines oder mehrerer Transponder eine einzelne Antenne nicht ausreicht. Man denke hier beispielsweise an eine Palette voll von zu erfassenden Produkten, die in verschiedenen Orientierungen auf der Palette angeordnet sind. In solchen Fällen kann beispielsweise bei induktiven Systemen die Form der Antenne verändert werden, indem z. B. spezielle räumlich geformte Drahtwindungen zum Einsatz kommen. Weiterhin können mehrere räumlich getrennte und in unterschiedlichen Orientierungen zueinander angeordnete Antennen eingesetzt werden, wobei zwischen diesen nach einem vorbestimmten festgelegten Schaltmuster umgeschalten wird.

Durch festgelegte Schaltmuster beim Umschalten zwischen mehreren Antennen können nur Antennenrahmenzeiten, das sind die Zeitintervalle, in denen eine Antenne aktiv ist, die eine feste Zeitdauer bzw. einen festen Zeitrahmen aufweisen, eingestellt werden, wobei die Antennenrahmenzeit größer sein muss als die Dauer des längsten zu erwartenden Sende- bzw. Empfangsvorganges. Dadurch entstehen lange Lese-/Schreibzeiten beim Wiederholen von Lese-/Schreibvorgängen mittels unterschiedlicher Antennen. Ist z. B. das Ausleuchten von vier Raumrichtungen durch vier Antennen notwendig, benötigt ein einzelner Lese-/Schreibvorgang das Vierfache der Übertragungszeit des Lese-/Schreibvorganges maximaler Dauer, unabhängig davon, wie lange die Übertragungszeit der zu übermittelnden Daten tatsächlich ist.

Die Dokumente US-A-2004 02 66 375, US-A-6 018 555 und EP-A-1 315 325 offenbaren Systeme zum Bestimmen einer aktiven Phase einer Antenne.

Die Aufgabe der vorliegenden Erfindung besteht darin, ein Verfahren und eine Vorrichtung zur Erhöhung der Effizienz von Sende-/Empfangsvorgängen mittels einer oder mehrerer Antennen zu schaffen.

Diese Aufgabe wird durch ein Verfahren nach Anspruch 1 oder eine Vorrichtung nach Anspruch 9 gelöst. Die vorliegende Erfindung schafft ein Verfahren zum Bestimmen einer aktiven Phase einer Antenne während eines Sende- oder Empfangsvorganges durch Empfangen von Protokolldaten eines Übertragungsprotokolls, welches den Datenfluss zwischen einem Sendegerät und einem Empfangsgerät steuert, durch Auswerten der Protokolldaten mit einer Steuereinrichtung um ein Zeitintervall für die Dauer der aktiven Phase der Antenne zu bestimmen, und durch Steuern der aktiven Phase der Antenne basierend auf der Auswertung der Protokolldaten. Die vorliegende Erfindung schafft eine Vorrichtung zum Bestimmen einer aktiven Phase einer Antenne während eines Sende- oder Empfangsvorganges aus einer Empfangsvorrichtung zum Empfangen von Protokolldaten eines Übertragungsprotokolls, welches den Datenfluss zwischen einem Sendegerät und einem Empfangsgerät steuert, aus einer Steuereinrichtung zum Auswerten der Protokolldaten, die ausgebildet ist, ein Zeitintervall für die Dauer der aktiven Phase der Antenne bestimmen zu können, und aus einer Vorrichtung zum Steuern der aktiven Phase der Antenne basierend auf der Auswertung der Protokolldaten.

Der Grundgedanke der vorliegenden Erfindung besteht darin, dass eine aktive Phase einer Antenne während eines Sende- oder Empfangsvorganges dadurch gesteuert werden kann, dass die Protokolldaten eines den Datenfluss steuernden Übertragungsprotokolls analysiert werden und daraus die zu erwartende Übertragungsdauer abgeleitet wird, bzw. als Reaktion auf während der Kommunikation auftretende Ereignisse die aktuelle Sende-/Empfangsdauer dynamisch angepasst wird. Dadurch lassen sich die tatsächlichen Übertragungszeiten zur Steuerung einer Antenne verwenden und es lässt sich die Effizienz der Datenübertragung gegenüber den bisherigen Verfahren, die mit voreingestellter Sendezeitdauer pro Antenne arbeiten, erhöhen.

In einem speziellen Ausführungsbeispiel der vorliegenden Erfindung wird das Datenübertragungsprotokoll, das den Datenfluss zwischen einem Transponder und einem Lese-/Schreibgerät bzw. einer Identifikationseinheit steuert, von einer Steuereinrichtung beziehungsweise einem Steuermodul ausgewertet und dazu verwendet, die notwendige Dauer einer aktive Phase einer Antenne bzw. die Rahmenzeit zu berechnen und aus einer Mehrzahl von Antennen eine geeignete aktive Antenne auszuwählen. Die zu übertragenden Nutzdaten werden dabei von einem externen Gerät, das beispielsweise ein PC sein kann, übermittelt und sind unabhängig von den auszuwertenden Protokolldaten. Zum Zweck der Auswertung der Protokollinformationen werden die im Lese-/Schreibgerät extrahierten Protokollinformationen an das protokollabhängige Steuermodul weitergegeben. Beispiele für an das Steuermodul übermittelte Protokollinformationen sind ein Kommandocode und ein Antwortcode. Beispielsweise kann der Kommandocode ein Befehl zum Schreiben oder Lesen sein. Bei einem Schreibvorgang werden zusätzlich die zu schreibenden Daten vom Lese-/Schreibgerät zum Transponder mit übertragen. Dadurch verlängert sich die Sendedauer bzw. der Anforderungsrahmen eines Schreibbefehls gegenüber dem Anforderungsrahmen eines Lesebefehls, es lässt sich anhand dieser Informationen also die erforderliche Einschaltzeit einer Antenne berechnen. Bei einer Antwort des Transponders kann man ähnliche Überlegungen anstellen. Der Antwortcode enthält Statusfelder, so genannte Flags, die angeben, ob bei der Übertragung der Informationen Fehler aufgetreten sind. Dies kann die Steuereinrichtung veranlassen, die Übertragung zu wiederholen bzw. nach einer vorbestimmten Maximaldauer die Kommunikation zu beenden oder die Übertragung über eine andere Antenne erneut zu versuchen. Im Fall von Kollisionen von Datenpaketen kann beispielsweise die Rahmenzeit verlängert und somit dynamisch angepasst werden, wenn zusätzliche Zeit (Zeitschlitze) für die Kommunikation benötigt wird.

Durch die eben dargelegte flexible Bestimmung der Antennenrahmenzeit und der Möglichkeit der Antennenauswahl können für bestimmte Anwendungsfälle unterschiedliche spezielle Modi abgeleitet werden, die das Verhalten der Steuereinheit beschreiben. So kann neben der normalen Identifizierung eine sichere Identifizierung gefordert werden, wobei im Gegensatz zur normalen Identifizierung bei der sicheren Identifizierung die Information mehrerer Lesevorgänge unterschiedlicher Antennen ausgewertet wird. Des weiteren ist ein Lokalisierungsmodus implementierbar, in dem üblicherweise alle Antennen benutzt werden, wobei deren Einschaltdauer und Einschaltreihenfolge durch die Steuereinheit basierend auf den Informationen des Übertragungsprotokolles gesteuert werden, sodass sich aus der Protokollauswertung eine Aussage darüber treffen lässt, an welchem Ort sich ein Transponder befindet.

In einem weiteren Ausführungsbeispiel der vorliegenden Erfindung ist das Verfahren auf einem programmierbaren FPGA-Chip implementiert. Die Steuereinrichtung erhält dabei vom Lese-/Schreibgerät den Kommando- und den Antwortcode, aus dem unter anderem der Startzeitpunkt und der Endzeitpunkt eines zu übertragenden Datenpakets bestimmt wird. Des weiteren umfasst die FPGA-Struktur eine Einrichtung um die vom Lese-/Schreibgerät seriell angelieferten Protokolldaten zu parallelisieren. Darüber hinaus wird vom Lesegerät die Information an die Steuereinheit weitergeleitet, ob es bei dem letzten Datenübertragungsversuch eine Kollision mehrerer Pakete gegeben hat, so dass die aktuelle Sende-/Empfangszeit verlängert werden muss, und ob die eventuelle Mehrfachübertragung eines Datenpaketes die jeweils selbe Antwort ergeben hat. Zusätzlich sind Benutzereingaben an die Steuereinheit möglich, wie z. B. die Anzahl der zur Verfügung stehenden Antennen, eine Antennennummer, eine Rahmenzeit oder die Auswahl eines Operationsmodus. Zusätzlich kann ein externer Takt für den FPGA-Chip vorgegeben werden der von einer Taktgenerierungseinheit verarbeitet wird, welche wiederum die gesamten auf dem Chip anfallenden Operationen synchronisiert. Nach der Berechnung der Rahmenzeit und der auszuwählenden Antenne wird die Antennennummer und die Rahmenzeit codiert an einen externen Decoder weitergeleitet, der mit den decodierten Informationen die Antennen eines Antennenarrays ansteuert.

Bevorzugte Ausführungsbeispiele der vorliegenden Erfindung werden nachfolgend Bezug nehmend auf die beiliegenden Zeichnungen näher erläutert. Es zeigen:
- Fig. 1: ein schematisches Flussdiagramm gemäß einem Ausführungsbeispiel der vorliegenden Erfindung;
- Fig. 2: ein Blockschaltbild zur Realisierung des Verfahrens von Fig. 1 auf einer FPGA-Struktur; und
- Fig. 3: die zeitlichen Verläufe ausgewählter Signale, wie sie auf der FPGA-Struktur von Fig. 2 auftreten.

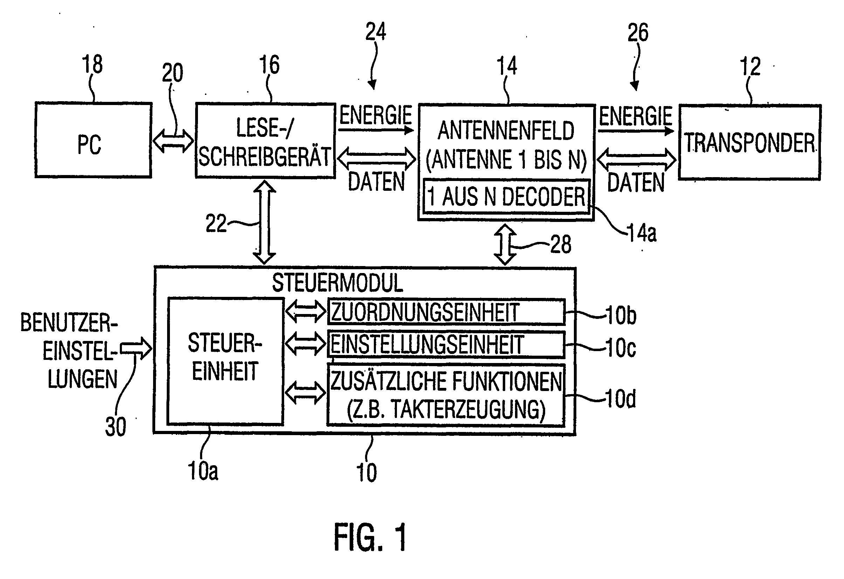

Fig. 1 zeigt ein Steuermodul bzw. eine Steuereinrichtung 10, welches eine Steuereinheit 10a, eine Zuordnungseinheit 10b, eine Einstellungseinheit 10c und eine zusätzliche Funktionseinheit 10d beinhaltet, und die das erfindungsgemäße Verfahren implementiert, einen Transponder 12, ein Antennenfeld 14, das einen "1-aus-N-Decoder" 14a beinhaltet, ein Lese-/Schreibgerät 16, und einen Personalcomputer bzw. PC 18.

Die innerhalb des Steuermoduls 10 befindlichen Funktionseinheiten 10a - 10d sind zum Zweck des Datenaustauschs innerhalb des Steuermoduls 10 miteinander durch Datenleitungen verbunden. Der PC 18 ist mit dem Lese-/Schreibgerät 16 zum Zweck des Datenaustauschs über eine erste Datenverbindung 20 verbunden, welches wiederum mit dem Steuermodul 10 über eine zweite Datenverbindung 22 verbunden ist. Das Lese-/Schreibgerät 16 ist außerdem mit dem Antennenfeld 14 über eine Verbindung 24 verbunden, wobei über die Verbindung 24 sowohl Daten als auch die Speiseenergie des Transponders von dem Lese-/Schreibgerät an das Antennenfeld 14 übermittelt werden. Eine Antenne des Antennenfeldes 14 stellt über das von ihm ausgesendete elektromagnetische Feld eine Verbindung 26 zu dem Transponder 12 her, wobei über diese Verbindung sowohl Daten als auch die Speiseenergie für den Transponder transferiert werden. Das Steuermodul 10 ist über eine Datenleitung 28 mit dem Antennenfeld 14 verbunden, um die Antennen des Antennenfeldes 14 zu steuern. Über eine Benutzerschnittstelle 30 kann der Benutzer zusätzlich vorbestimmte Grundeinstellungen an das Steuermodul 10 übergeben.

Das dargestellte Verfahren erlaubt die protokollabhängige Steuerung und Auswahl von Antennen und die Berechnung der Einschaltzeit dieser Antennen durch Informationen, die aus dem Datenübertragungsprotokoll, das den Datenfluss zwischen dem Transponder 12 und dem Lese-/Schreibgerät 16 steuert, gewonnen werden. Von dem PC 18 werden an das Lese-/Schreibgerät 16 zu sendende Nutzdaten über die Datenverbindung 20 übermittelt oder es wird an das Lese-/Schreibgerät 16 eine Aufforderung zum Lesen von Daten aus dem Transponder 12 übermittelt. Der Inhalt der Nutzdaten selbst spielt bei dem Verfahren keine Rolle, sodass diese nicht weiter betrachtet werden. Das Lese-/Schreibgerät 16 kombiniert die Nutzdaten in geeigneter Weise mit den den Datenfluss steuernden Protokolldaten des zur Verwendung kommenden Datenübertragungsprotokolles, wie z.B. ISO/IEC 15693. Um das Steuern der Antenneneinschaltzeiten zu ermöglichen, werden die vom Lese-/Schreibgerät 16 extrahierten Protokollinformationen zusammen mit weiteren im Lese-/Schreibgerät 16 erzeugten Informationen über die Verbindung 22 an das Steuermodul 10 weiter gegeben. Das Lese-/Schreibgerät 16 sendet die Daten über die Verbindung 24 an das steuerbare Antennenfeld 14, wobei diese von der aktuell aktiven Antenne an den Transponder 12 übermittelt oder von dem Transponder gelesen werden. Dabei ist zu beachten, dass der Transponder 12 die Energie, die er zur Funktion benötigt, aus dem die Daten übertragenden Feld selbst bezieht, diese Energie also letztlich von dem Lese-/Schreibgerät 16 geliefert wird. Zusammen mit Benutzer-/Grundeinstellungen, die dem Steuermodul 10 über die Benutzerschnittstelle 30 eingeprägt und in der Einstellungseinheit 10c gespeichert werden, werden die Zeitrahmen für die aktuell selektierte Antenne von der Steuereinheit 10a ermittelt. In der Zuordnungseinheit 10b wird die Information über die auszuwählende Antenne mit dem berechneten Zeitrahmen kombiniert und über die Datenleitung 28 an das Antennenfeld 14 übermittelt. Diese kombinierte Information wird von dem "1-aus-N-Decoder" 14 rekonstruiert und die von Steuereinheit 10a bestimmte Antenne wird für die Länge des erforderlichen Zeitrahmens ausgewählt. Die zusätzliche Funktionseinheit 10d des Steuermoduls 10 kann, zusätzliche Funktionalitäten implementieren, so kann beispielsweise ein Taktgenerator innerhalb des Steuermoduls erforderlich sein.

Zum Berechnen der Zeitrahmen wird dabei beispielsweise der Kommandocode des Datenübertragungsprotokolls, der im Wesentlichen die Struktur der Anforderungs- und Antwortrahmen bestimmt, von der Steuereinheit 10a ausgewertet. Ebenso wird der Antwortcode, der im Wesentlichen Auskunft über Übertragungsfehler gibt, ausgewertet. Ein Kommandobefehl kann ein Befehl zum Schreiben oder Lesen sein. Wird beispielsweise das Kommando "Schreiben" ausgewählt, so werden zusätzlich die zu schreibenden Daten zum Transponder mit übertragen. Dadurch verlängert sich der Anforderungsrahmen bzw. Request eines Schreibbefehls gegenüber dem Anforderungsrahmen für einen Lesebefehl, der die zu lesenden Daten ja noch nicht enthält. Auch bei der Antwort des Transponders, der Response, werden ähnliche Überlegungen angestellt. Es werden beispielsweise Statusfelder, die so genannten "Flags", ausgewertet, um zu sehen, ob bei der Übertragung der Informationen Fehler bzw. Kollisionen aufgetreten sind. Dies bedingt beispielsweise ein Wiederholen der Übertragung, ein Beenden der Kommunikation nach einer bestimmten Maximaldauer, das erneute Versuchen der Kommunikation über eine andere Antenne oder, im Fall von Kollisionen, das Verlängern des aktuellen Zeitrahmens. Durch die Anpassung der Einschaltdauer bzw. der Rahmenlänge einer Antenne an die Dauer der tatsächlich zur Übertragung anstehenden Daten, wird überflüssige Einschaltzeit einer Antenne vermieden. Ist ein mehrfaches Senden erforderlich, reduziert sich dadurch der im Vergleich zu herkömmlichen Verfahren erforderliche Zeitaufwand zum Teil erheblich. Dies gilt insbesondere, wenn zum Erreichen eines erfolgreichen Lese- oder Schreibvorganges das Senden mittels mehrerer Antennen notwendig ist, wobei hier zusätzlich davon profitiert wird, dass die Bestimmung der zu verwendenden Antenne ebenfalls protokollabhängig ist.

Aus dieser intelligenten und flexiblen Steuerbarkeit des Antennenfelds 14 und der Möglichkeit der Antennenauswahl durch das Steuermodul 10 ergibt sich die Möglichkeit, spezielle Modi abzuleiten, die auf bestimmte Anwendungsfälle abgebildet werden können. Zum Beispiel kann durch Redundanz der Identifizierung mittels unterschiedlicher Antennen eine sichere Identifizierung gewährleistet werden. Der Unterschied von der normalen zur sicheren Identifizierung ist also, dass bei der sicheren Identifizierung die Informationen mehrerer Lesevorgänge unterschiedlicher Antennen ausgewertet und verglichen werden und danach entschieden wird, ob weitere Antennen in den Lesevorgang miteinbezogen werden, deren Zeitrahmen dann wiederum aus dem Transferprotokoll berechnet werden. Beim Einsatz mehrerer Antennen, deren Einschaltrahmenzeit von dem Steuermodul gesteuert werden, lässt sich auch eine Lokalisierung des Transponders durchführen. Im Lokalisierungsmodus werden, in der Regel, alle Antennen benutzt und deren Einschaltzeit wiederum durch die Informationen des Übertragungsprotokolls gesteuert.

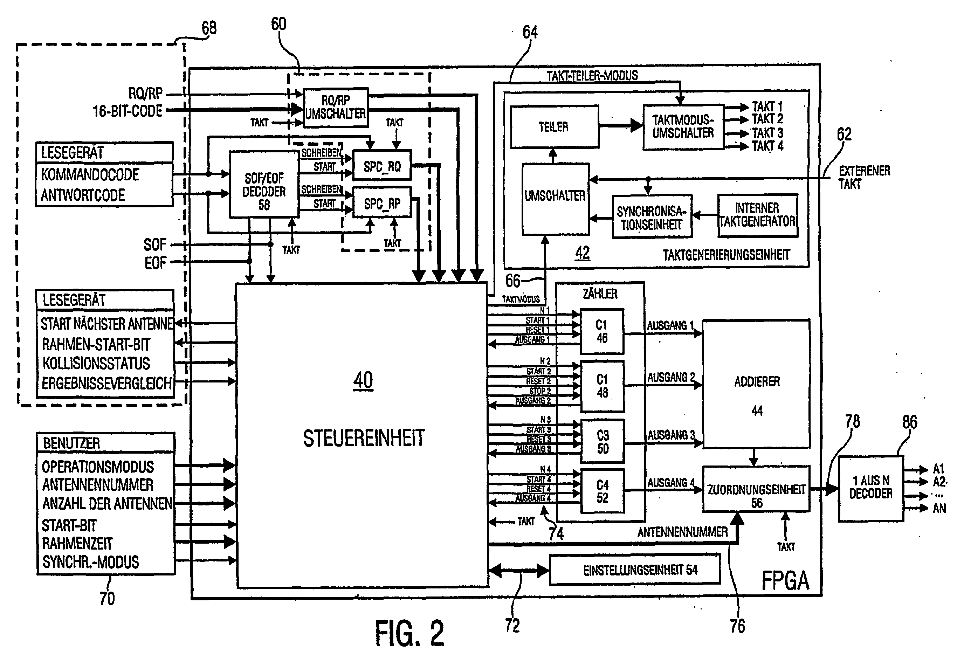

In Fig. 2 ist für eine Steuermodulstruktur gezeigt, wie das Verfahren der protokollgesteuerten Antennenselektion auf einem FPGA-Chip, dessen Funktionseinheiten schematisch dargestellt sind, realisiert werden kann. Der FPGA-Chip umfasst dabei die Steuereinheit 40, eine Taktgenerierungseinheit 42, einen Addierer 44, einen ersten Zähler 46, einen zweiten Zähler 48, einen dritten Zähler 50, einen vierten Zähler 52, eine Einstellungseinheit 54, eine Zuordnungseinheit 56, einen SOF/EOF-Decoder 58 und eine Parallelisierungsvorrichtung 60.

Die Taktgenerierungseinheit 42 weist eine Mehrzahl von Ausgängen auf, die mit Eingängen aller weiteren Funktionseinheiten verbunden sind um einen taktsynchronen Betrieb aller Funktionseinheiten zu ermöglichen. Zusätzlich kann der Taktgenerierungseinheit 42 über einen Takteingang 62 ein extern generierter Takt vorgegeben werden und ein Taktmodus kann von der Steuereinheit 40 gewählt werden, wozu diese mit 2 Eingängen der Taktgenerierungseinheit 42 über Leitungen 64 und 66 verbunden ist. Die FPGA-Struktur ist über eine Datenschnittstelle 68 mit dem Lese-/Schreibgerät 16 verbunden, um Daten und Steuersignale mit dem Lesegerät auszutauschen. Eine Benutzerschnittstelle 70 ist mit Eingängen der Steuereinheit 40 verbunden, um Benutzereingaben zu ermöglichen. Die Steuereinheit 40 ist über eine Datenverbindung 72 mit der Einstellungseinheit 54 verbunden, in welcher die Grundeinstellungen der Systemparameter, wie z.B. die Anzahl der Antennen, gespeichert werden. Die Steuereinheit 40 ist mit jedem der Zähler 46, 48, 50 und 52 über Datenleitungen 74 verbunden, wobei an einem Eingang "N" jedes Zählers die vom Zähler zu zählende Zahl anliegt, ein Eingang "Start" den Start des Zählvorganges auslöst und ein Eingang "Reset" die an den Ausgängen der Zähler ausgegebene Zahl zurücksetzt. Ein Ausgang der Zähler 46, 48 und 50 ist mit je einem Eingang des Addierers 44 verbunden, jeweils ein Ausgang der Zähler 46, 48, 50 und 52 ist mit der Steuereinheit 40 verbunden und ein erster Ausgang von Zähler 52 ist mit einem Eingang der Zuordnungseinheit 56 verbunden. Der Addierer 44 ist mit einem zweiten Eingang der Zuordnungseinheit 56 verbunden, die Steuereinheit 40 ist mit einem dritten Eingang der Zuordnungseinheit 56 über eine Leitung 76 verbunden. Ein Ausgang 78 der Zuordnungseinheit 56 ist mit einem Eingang eines außerhalb der FPGA-Struktur befindlichen 1-aus-N-Decoders 80 verbunden.

Die Taktgenerierungseinheit 42 dient zur Taktgenerierung, Taktteilung und Taktsynchronisation. Den Kern des Steuermoduls von Fig. 2 bildet die Steuereinheit 40, die aufgrund ankommender Protokollinformationen die Einschaltzeit bzw. Rahmenzeit der Antennen berechnet. Zur Berechnung der Rahmenzeiten und zur Auswahl der Antennen liegen an der Steuereinheit die Protokollinformationen, weitere Daten des Lesegerätes 16 sowie Benutzereinstellungen an. Der SOF/EOF-Decoder 58 bestimmt den Anfang bzw. das Ende des Datenübertragungsprotokolls, d.h. den Beginn eines Datenpaketes, den "Start of Frame" SOF, und das Ende eines Datenpaketes, den "End of Frame" EOF. Zusätzlich können von der Parallelisierungsvorrichtung 60 die seriellen Informationssignale bzw. Protokollinformationen in parallele Informationen zur weiteren Verarbeitung umgewandelt werden.

Beispiele für die vom Lesegerät 16 benutzten Informationen sind die Signale SOF und EOF sowie der Kommandocode, der Antwortcode der Kollisionsstatus und ein Vergleich der Ergebnisse. Ein Benutzer kann über Benutzerschnittstelle 70 weiterhin beispielsweise einen Operationsmodus, eine Antennennummer, ein Anzahl von Antennen, ein Start-Bit und eine Rahmenzeit definieren.

Die Steuereinheit 40 schickt ebenfalls diverse Informationen und Signale zum Lesegerät 16 um dadurch Steuervorgänge des Lesegerätes einzuleiten, wie zum Beispiel Signale für ein Rahmen-Start-Bit, das den Beginn eines neuen Antennenrahmens anzeigt, und Signale, die ein Umschalten zur nächsten Antenne anzeigen.

Die Steuereinheit 40 errechnet aus den ihr vom Lesegerät 16 zur Verfügung gestellten Signalen und den über die Benutzerschnittstelle 70 eingegebenen Informationen die Steuersignale für die Zähler 46, 48, 50 und 52, die jeweils verschiedene Anteile der Übertragungsrahmen aufbauen und diese an den Addierer 44 weiterleiten. Der Addierer verbindet die Einzelrahmenanteile zu einer Gesamtrahmenzeit für die Antenne. Eine Aufteilung der Gesamtrahmenzeit in mehrere einzelne Anteile ist notwendig, da neben verschiedenen Reaktionsanteilen auch Schutzintervalle benötigt werden. Diese kommen beispielsweise dadurch zustande, dass der Transponder 12 die für seine Funktion notwendige Energie aus der die Daten selbst übermittelnden elektromagnetischen Welle entnimmt. Der Transponder muss daher eine endliche Zeit der Energiesammlung dem eingeschalteten Antennenfeld ausgesetzt sein, bis er voll funktionsfähig ist, was beispielsweise mittels eines Einzelrahmenanteils von dem Zähler 46 sichergestellt werden kann. Ein Schutzintervall nach dem Versand der eigentlichen Daten kann beispielsweise notwendig werden, wenn nach dem Datenversand auf eine andere Antenne gewechselt werden soll.

Die Zuordnungseinheit 56 kombiniert die von der Steuereinheit errechnete und mittels der Signalleitung 76 an die Zuordnungseinheit übermittelte Antennennummer mit der von dem Addierer 44 errechneten Antennenrahmenzeit und leitet die generierten Signale an den 1-aus-N-Decoder 80. Diese Signale werden dort decodiert und für die Ansteuerung der einzelnen Antennen des angeschlossenen Antennenfeldes benutzt.

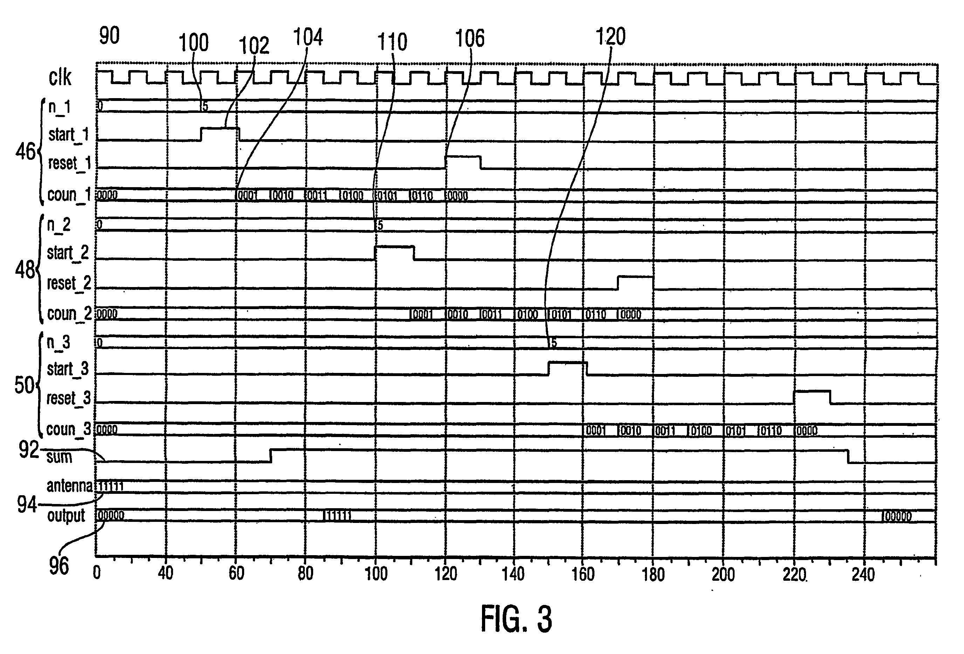

Fig. 3 zeigt die für das Erzeugen eines Antennenrahmens wesentlichen Signale der Steuermodulstruktur aus Fig. 2. Dabei ist auf der x-Achse die Zeit in willkürlichen Einheiten dargestellt. Signal 90 ist das von der Taktgenerierungseinheit 42 erzeugte Taktsignal, alle anderen Signale werden mit dem Takt synchronisieren. Dargestellt sind die anhand von Fig. 2 beschriebenen, die Zähler steuernden Signale "n", "start" und "reset", die von der Steuereinheit 40 für die Zähler 46, 48 und 50 erzeugt werden. Zusätzlich gibt das Signal "count" die jeweils an den Ausgängen der Zähler ausgegebenen Zahlen an. Ein Signal 92 zeigt das an Ausgang von Addierer 44 anliegende Signal, ein Signal 94 gibt die Nummer der von der Steuereinheit 40 errechneten Antenne an, wie sie über die Leitung 76 am Eingang von der Zuordnungseinheit 56 anliegt. Ein Signal 96 beschreibt die Zahl, die an dem Ausgang der Zuordnungseinheit 56 ausgegeben wird.

Wie in Fig. 3 zu sehen ist, wird zum Zeitpunkt 100 von der Steuereinheit 40 ein erster Rahmenanteil mit einer Länge von fünf Taktzyklen berechnet und mit Startsignal 102 beginnt der Zähler 46 die an seinem Ausgang ausgegebene Zahl von Null an mit jedem Taktzyklus zu inkrementieren, bis sie mit einem Signal 106 zurückgesetzt wird. Zum Zeitpunkt 110 wird von der Steuereinheit 40 ein zweiter Rahmenanteil von fünf Taktzyklen Länge für den Zähler 48 berechnet. Äquivalent wie für den Zähler 46 oben beschrieben, beginnt der Zähler 48 die Zahl an seinem Ausgang zu inkrementieren. Zum Zeitpunkt 120 berechnet die Steuereinheit 40 einen dritten Rahmenanteil, der von dem Zähler 50 an seinem Ausgang hochgezählt wird. Der Addierer 44 addiert die an seinen Eingängen anliegenden Zahlenfolgen, sodass an seinem Ausgang insgesamt 15 vollständige Taktzyklen lang das Signal 92 aktiv ist. Die von der Steuereinheit 40 bestimmte Antennennummer 94, wird von der Zuordnungseinheit 56 mit dem Ausgangssignal des Addierers 44 kombiniert, sodass der 1-aus-N-Decoder 80 insgesamt 15 volle Taktzyklen lang als Eingangssignal 96 die Nummer der ausgewählten Antenne erhält.

Wenngleich die Erfindung anhand von Fig. 1 und Fig. 2 hier für die Anwendung an einem Transponder Lese-/Schreibgerät diskutiert wurde, ist sie auf jede denkbare Datenübertragungstechnik anwendbar, bei der Sende- und Empfangsantennen zum Einsatz kommen, wie zum Beispiel die Wireless Lan Technologie. Insbesondere kann jedes Datenübertragungsprotokoll anstelle des exemplarisch zitierten ISO/IEC 15693-Protokolls von dem Steuermodul 40 zur Analyse herangezogen werden, um das Antennenfeld 14 zu steuern. Auch sind die zur Analyse verwendeten Protokollparameter, wie sie anhand von Fig. 1 und Fig. 2 beschrieben werden, nicht festgelegt. Es können darüber hinaus alle aus dem Übertragungsprotokoll extrahierbare weiteren Informationen zur Steuerung des Antennenfeldes 14 verwendet werden. Zusätzlich durch die Steuerung des Antennenfeldes 14 durch die Vorgabe bestimmter Betriebsmodi für das Steuermodul 40, kann durch Benutzereingaben eine Antenne fest vorgewählt bzw. der zeitliche Verlauf des Einschaltpunktes verschiedener Antennen anhand eines vorbestimmten Ablaufplanes vorgegeben werden. Auch die Antennenrahmenzeiten können durch Benutzereingabe auf einen festen Wert eingestellt werden, bzw. durch einen vorgegebenen zeitlichen Verlauf variiert werden. Auch ist es nicht zwingend erforderlich, dass die durch das Steuermodul 40 gesteuerten Antennen des Antennenfeldes 14, die z. B. räumlich in einer vorbestimmten Anordnung angebracht sind, denselben Frequenzbereich besitzen müssen.

Die in Fig. 1 gezeigten Funktionsblöcke 10, 14 und 16 können auch in größeren Funktionsblöcken zusammengefasst sein bzw. anders aufgeteilt werden. Insbesondere können aus den Funktionsblöcken 10, 14 und 16 beliebige Kombinationen gebildet werden, um diese beispielsweise innerhalb eines einzelnen Gerätes zusammenzufassen. Dabei können zum Beispiel das Steuermodul 10 und das Lese-/Schreibgerät 16 innerhalb eines Gerätes zusammengefasst werden, möglich ist auch die Zusammenfassung des Lese-/Schreibgerät 16 und des Antennenfeldes 14 oder des Antennenfeldes 14 und des Steuermoduls 10 innerhalb eines Gerätes.

Das Verfahren muss nicht wie in Fig. 2 gezeigt auf einer FPGA-Struktur realisiert werden, es sind beliebige andere Ausführungsformen des Verfahrens denkbar, wie beispielsweise die Realisierung in einem ASIC oder einem Mikrocontroller, wofür die in Fig. 2 gezeigten Funktionsblöcke entsprechend angepasst werden können. Die in Fig. 2 gezeigte Taktgenerierungseinheit 42 dient der Taktgenerierung und Synchronisation aller Komponenten, sie kann wahlweise durch einen externen Takt gesteuert werden, sie kann den Takt selbst generieren, einen vorhandenen Takt durch Teilung zur Synchronisation verwenden oder die Taktsynchronisation kann auf andere Art und Weise erfolgen. Die Codierung der Zuordnungseinheit 56, die die Länge des zu verwendenden Antennenrahmens und die Antennennummer zusammen in ein Signal codiert, kann auf beliebige andere Art und Weise als in Fig. 3 gezeigt realisiert werden. Entsprechend ist für den 1-aus-N-Decoder 80 jedwede alternative Ausführungsform denkbar, die ein Feld von Antennen steuern kann, beispielsweise kann diese Funktionseinheit auch in die FPGA Struktur integriert sein.

In einem weiteren Ausführungsbeispiel der vorliegenden Erfindung dient die Erfindung der Erzeugung von protokollabhängigen Zeitrahmen zur Steuerung von Antennen eines Antennenfeldes. Die notwendigen Informationen zur Erzeugung der jeweiligen Zeitrahmen werden dabei aus dem Protokoll zwischen Schreib-/Lesegerät und Transponder abgeleitet, können aber auch durch einen einstellbaren Algorithmus vorgegeben oder manuell eingestellt werden.

Ein weiteres Ausführungsbeispiel dient dem Generieren der Antennennummer, wobei die Reihenfolge der ausgewählten Antennen dabei ebenfalls durch das Protokoll generiert wird, aber auch, wie bei der Berechnung der Rahmenzeit, durch einen Algorithmus vorgegeben oder manuell eingestellt werden kann.

Ein weiteres Ausführungsbeispiel dient dem Kombinieren der berechneten Rahmenzeiten mit einer ausgewählten Antenne.

Abhängig von den Gegebenheiten kann das erfindungsgemäße Verfahren zur protokollgesteuerten Antennenselektion in Hardware oder in Software implementiert werden. Die Implementation kann auf einem digitalen Speichermedium, insbesondere einer Diskette oder CD mit elektronisch auslesbaren Steuersignalen erfolgen, die so mit einem programmierbaren Computersystem zusammenwirken können, dass das erfindungsgemäße Verfahren zur protokollgesteuerten Antennenselektion ausgeführt wird. Allgemein besteht die Erfindung somit auch in einem Computer-Programm-Produkt mit einem auf einem maschinenlesbaren Träger gespeicherten Programmcode zur Durchführung des erfindungsgemäßen Verfahrens, wenn das Computer-Programm-Produkt auf einem Rechner abläuft. In anderen Worten ausgedrückt kann die Erfindung somit als ein Computer-Programm mit einem Programmcode zur Durchführung des Verfahrens realisiert werden, wenn das Computer-Programm auf einem Computer abläuft.

## Patentansprüche

1. Verfahren zum Bestimmen einer aktiven Phase einer Antenne während eines Sende- oder Empfangsvorganges mit folgenden Schritten:
Empfangen von Protokolldaten eines Übertragungsprotokolls, welches den Datenfluss zwischen einem Sendegerät und einem Empfangsgerät steuert;
Auswerten der Protokolldaten mit einer Steuereinrichtung (10), um ein Zeitintervall für die Dauer der aktiven Phase der Antenne zu bestimmen; und
Steuern der aktiven Phase der Antenne basierend auf der Auswertung der Protokolldaten.

2. Verfahren gemäß Anspruch 1, bei dem die Protokolldaten einen Kommandocode beinhalten, der das Ziel der durchzuführenden Kommunikation beschreibt und Steuerinformationen über die durchzuführende Kommunikation aufweist.

3. Verfahren gemäß Ansprüchen 1 oder 2, bei dem die Protokolldaten einen Antwortcode aufweisen, der die Reaktion auf einen Sendevorgang beinhaltet.

4. Verfahren nach einem der Ansprüche 1 bis 3 mit folgenden zusätzlichen Schritten:
Bestimmen einer aktiven Antenne aus einer Mehrzahl von Antennen (14) eines Hauptkommunikationsgerätes (16) basierend auf den Protokolldaten; und
Auswählen der aktiven Antenne während des Sende- oder Empfangsvorganges.

5. Verfahren gemäß Anspruch 4 zum sicheren Identifizieren und/oder zum Lokalisieren eines Nebenkommunikationsgerätes (12) durch das Hauptkommunikationsgerät (16) durch mehrmaliges Auswerten identischer Protokolldaten unter Verwendung unterschiedlicher, durch die Steuereinrichtung bestimmter, Antennen.

6. Verfahren gemäß einem der Ansprüche 1 bis 5, bei dem die aktive Phase und die Auswahl der Antenne eines RFID-Sende-/Lesegerätes gesteuert wird.

7. Verfahren gemäß einer der Ansprüche 1 bis 6, bei dem die Protokolldaten des ISO/IEC 15693 Protokolls ausgewertet werden.

8. Computerprogramm mit Programmcode zur Durchführung des Verfahrens nach einem der Ansprüche 1 bis 7, wenn das Programm auf einem Computer abläuft.

9. Vorrichtung zum Bestimmen einer aktiven Phase einer Antenne während eines Sende- oder Empfangsvorganges mit folgenden Merkmalen:
Empfangsvorrichtung zum Empfangen von Protokolldaten eines Übertragungsprotokolls, welches den Datenfluss zwischen einem Sendegerät und einem Empfangsgerät steuert;
Steuereinrichtung (10) zum Auswerten der Protokolldaten, die ausgebildet ist, ein Zeitintervall für die Dauer der aktiven Phase der Antenne bestimmen zu können; und
Vorrichtung zum Steuern der aktiven Phase der Antenne basierend auf der Auswertung der Protokolldaten.

10. Vorrichtung gemäß Anspruch 9, bei dem die Protokolldaten einen Kommandocode beinhalten, der das Ziel der durchzuführenden Kommunikation beschreibt und Steuerinformationen über die durchzuführende Kommunikation aufweist.

11. Vorrichtung gemäß Ansprüchen 9 oder 10, bei dem die Protokolldaten einen Antwortcode aufweisen, der die Reaktion auf einen Sendevorgang beinhaltet.

12. Vorrichtung nach einem der Ansprüche 9 bis 11 mit folgenden zusätzlichen Merkmalen:
Vorrichtung zum Bestimmen einer aktiven Antenne aus einer Mehrzahl von Antennen (14) eines Hauptkommunikationsgeräts (16) basierend auf den Protokolldaten; und
Vorrichtung zum Auswählen der aktiven Antenne während des Sende- oder Empfangsvorganges.

13. Vorrichtung gemäß Anspruch 12 zum sicheren Identifizieren/oder zum Lokalisieren eines Nebenkommunikationsgerätes (12) durch das Hauptkommunikationsgerät (16) durch mehrmaliges Auswerten identischer Protokolldateh unter Verwendung unterschiedlicher, durch die Steuereinrichtung (10) bestimmter, Antennen.

14. Vorrichtung gemäß einer der Ansprüche 9 bis 13, bei dem die aktive Phase und die Auswahl der Antenne eines RFID-Sende-/Lesegerätes gesteuert wird.

15. Vorrichtung gemäß einer der Ansprüche 9 bis 14, bei dem die Protokolldaten des ISO/IEC 15693 Protokolls ausgewertet werden.

## Claims

1. Method for determining an active phase of an antenna during a transmitting or receiving operation, comprising:
receiving protocol data of a transmit protocol controlling the data flow between a transmitting device and a receiving device;
evaluating the protocol data with control means (10) to determine a time interval for the duration of the active phase of the antenna; and
controlling the active phase of the antenna on the basis of the evaluation of the protocol data.

2. Method according to claim 1, wherein the protocol data contain a command code describing the target of the communication to be performed and comprising control information about the communication to be performed.

3. Method according to claim 1 or 2, wherein the protocol data comprise a response code containing the reaction to a transmitting operation.

4. Method according to one of claims 1 to 3, further comprising:
determining an active antenna from a plurality of antennas (14) of a main communication device (16) on the basis of the protocol data; and
selecting the active antenna during the transmitting or receiving operation.

5. Method according to claim 4 for secure identifying and/or for localizing a side communication device (12) by the main communication device (16) by repeatedly evaluating identical protocol data using different antennas determined by the control means.

6. Method according to one of claims 1 to 5, wherein the active phase and the selection of the antenna of an RFID transmit/read device are controlled.

7. Method according to one of claims 1 to 6, wherein the protocol data of the ISO/IEC 15693 protocol are evaluated.

8. Computer program comprising a program code for executing the method according to one of claims 1 to 7 when the program runs on a computer.

9. Device for determining an active phase of an antenna during a transmitting or receiving operation, comprising:
a receiving device for receiving protocol data of a transfer protocol controlling the data flow between a transmitting device and a receiving device;
control means (10) for evaluating the protocol data which is implemented to be able to determine a time interval for the duration of the active phase of the antenna; and
a device for controlling the active phase of the antenna on the basis of the evaluation of the protocol data.

10. Device according to claim 9, wherein the protocol data contain a command code describing the target of the communication to be performed and comprising control information about the communication to be performed.

11. Device according to claim 9 or 10, wherein the protocol data comprise a response code containing the reaction to a transmitting operation.

12. Device according to one of claims 9 to 11, further comprising:
a device for determining an active antenna from a plurality of antennas (14) of a main communication device (16) on the basis of the protocol data; and
a device for selecting the active antenna during the transmitting or receiving operation.

13. Device according to claim 12 for secure identifying/or for localizing a side communication device (12) by the main communication device (16) by repeatedly evaluating identical protocol data using different antennas determined by the control means (10).

14. Device according to one of claims 9 to 13, wherein the active phase and the selection of the antenna of an RFID transmitting/read device are controlled.

15. Device according to one of claims 9 to 14, wherein the protocol data of the ISO/IEC 15693 protocol are evaluated.

## Revendications

1. Procédé pour déterminer une phase active d'une antenne pendant une opération d'émission ou de réception, aux étapes suivantes consistant à:
recevoir des données d'un protocole de transmission qui commande le flux de données entre un appareil d'émission et un appareil de réception;
évaluer les données de protocole par un moyen de commande (10), pour déterminer un intervalle de temps pour la durée de la phase active de l'antenne; et
régler la phase active de l'antenne sur base de l'évaluation des données de protocole.

2. Procédé selon la revendication 1, dans lequel les données de protocole contiennent un code de commande qui décrit l'objectif de la communication à effectuer et présente des informations de commande relatives à la communication à effectuer.

3. Procédé selon les revendications 1 ou 2, dans lequel les données de protocole présentent un code de réponse qui contient la réaction à une opération d'émission.

4. Procédé selon l'une des revendications 1 à 3, aux étapes additionnelles suivantes consistant à:
déterminer une antenne active parmi une pluralité d'antennes (14) d'un appareil de communication principal (16) sur base des données de protocole; et
sélectionner l'antenne active pendant l'opération d'émission ou de réception.

5. Procédé selon la revendication 4 permettant l'identification sûre et/ou la localisation d'un appareil de communication auxiliaire (12) par l'appareil de communication principal (16) en évaluant à plusieurs reprises des données de protocole identiques à l'aide de différentes antennes déterminées par le moyen de commande.

6. Procédé selon l'une des revendications 1 à 5, dans lequel sont commandées la phase active et la sélection de l'antenne d'un appareil d'émission/lecture RFID.

7. Procédé selon l'une des revendications 1 à 6, dans lequel sont évaluées les données du protocole ISO/IEC 15693.

8. Programme d'ordinateur avec un code de programme pour réaliser le procédé selon l'une des revendications 1 à 7 lorsque le programme est exécuté sur un ordinateur.

9. Dispositif pour déterminer une phase active d'une antenne pendant une opération d'émission ou de réception, aux caractéristiques suivantes:
dispositif de réception destiné à recevoir des données d'un protocole de transmission qui commande le flux de données entre un appareil d'émission et un appareil de réception;
moyen de commande (10) destiné à évaluer les données de protocole, lequel est réalisé de manière à pouvoir déterminer un intervalle de temps pour la durée de la phase active de l'antenne; et
dispositif pour régler la phase active de l'antenne sur base de l'évaluation des données de protocole.

10. Dispositif selon la revendication 9, dans lequel les données de protocole contiennent un code de commande qui décrit l'objectif de la communication à effectuer et présente des informations de commande relatives à la communication à effectuer.

11. Dispositif selon les revendications 9 ou 10, dans lequel les données de protocole présentent un code de réponse qui contient la réaction à une opération d'émission.

12. Dispositif selon l'une des revendications 9 à 11, aux caractéristiques additionnelles suivantes:
dispositif destiné à déterminer une antenne active parmi une pluralité d'antennes (14) d'un appareil de communication principal (16) sur base des données de protocole; et
dispositif destiné à sélectionner l'antenne active pendant l'opération d'émission ou de réception.

13. Dispositif selon la revendication 12 permettant l'identification sûre et/ou la localisation d'un appareil de communication auxiliaire (12) par l'appareil de communication principal (16) en évaluant à plusieurs reprises des données de protocole identiques à l'aide de différentes antennes déterminées par le moyen de commande (10).

14. Dispositif selon l'une des revendications 9 à 13, dans lequel sont commandées la phase active et la sélection de l'antenne d'un appareil d'émission/lecture RFID.

15. Dispositif selon l'une des revendications 9 à 14, dans lequel sont évaluées les données du protocole ISO/IEC 15693.
